# EUROPÄISCHE PATENTSCHRIFT

(11) **EP 1 817 196 B1**
(45) Veröffentlichungstag und Bekanntmachung des Hinweises auf die Patenterteilung: **26.01.2011**
(21) Anmeldenummer: 05809782.5
(22) Anmeldetag: 17.11.2005
(51) Int. Cl.: B60K 11/08, F01P 7/10, F01P 11/10

(54) **VORRICHTUNG ZUR REGULIERUNG EINES LUFTSTROMS ZUR MOTORKÜHLUNG UND VERFAHREN ZUR HERSTELLUNG EINER FALTKLAPPE**
DEVICE FOR REGULATION OF AN AIR FLOW FOR ENGINE COOLING AND METHOD FOR PRODUCTION OF A FOLDING SHUTTER
DISPOSITIF SERVANT A REGULER UN FLUX D'AIR POUR LE REFROIDISSEMENT D'UN MOTEUR ET PROCEDE POUR FABRIQUER UN VOLET PLIANT

(30) Priorität: 22.11.2004 DE 102004056328
(43) Veröffentlichungstag der Anmeldung: 15.08.2007
(73) Patentinhaber: Behr GmbH & Co. KG, 70469 Stuttgart (DE)
(72) Erfinder: HARICH, Martin, 71638 Ludwigsburg (DE)
(74) Vertreter: Grauel, Andreas
(86) Internationale Anmeldenummer: PCT/EP2005/012303
(87) Internationale Veröffentlichungsnummer: WO 2006/056359

(56) Entgegenhaltungen:
- EP-A- 0 206 299
- DE-A- 3 435 700
- DE-A1- 10 306 158
- US-A- 4 926 921

## Beschreibung

Die Erfindung betrifft eine Vorrichtung zur Regulierung eines Luftstroms zur Motorkühlung nach dem Oberbegriff des Anspruchs 1 sowie ein Verfahren zur Herstellung einer Faltklappe für eine Vorrichtung nach einem der Ansprüche 1 bis 27.

Für Aggregate zur Kühlung eines Kühlmittels eines Hauptmotors eines Kraftfahrzeugs sind Lösungen bekannt, bei denen mittels einer Rolljalousie oder auch mittels verdrehbarer Klappen eine Durchtrittsfläche für einen Luftstrom veränderbar ist. Diese Vorrichtungen können in Fahrtrichtung vor oder hinter einem Wärmetauscher bzw. Hauptkühler angeordnet sein. Insgesamt kann durch solche Vorrichtungen das Wärmemanagement des Motors besonders hinsichtlich extremer Situationen wie Kaltstart oder Dauervollast verbessert werden.

Aus der US 4,926,921 ist eine Jalousie zum bereichsweisen Schließen von Strömungsöffnungen bekannt.

Die DE 34 35 700 A1 offenbart eine Vorrichtung zum Steuern zumindest einer Kühlluftklappe in einer einer Brennkraftmaschine benachbarten Wand am Kühlergrill eines Kraftfahrzeuges.

In der EP 0 206 299 A1 wird eine Jalousie für einen Kühler einer Brennkraftmaschine offenbart.

Die DE 103 06 158 A1 offenbart eine Vorrichtung zur Einstellung der Luftzuströmung zu einem Motor eines Kraftfahrzeuges.

Hinsichtlich der Ausgestaltung einer eingangs genannten Vorrichtung werden zunehmend Anforderungen an Langlebigkeit, Zuverlässigkeit, Bauraumoptimierung und Gewicht gestellt.

Es ist die Aufgabe der vorliegenden Erfindung, eine eingangs genannte Vorrichtung anzugeben, bei der eine hohe Flexibilität hinsichtlich der Bauform ermöglicht ist. Es ist zudem die Aufgabe der Erfindung, ein Verfahren zur kostengünstigen Herstellung einer für die eingangs genannte Vorrichtung geeigneten Faltklappe und somit zur kostengünstigen Realisierung der gesamten Vorrichtung bereitzustellen.

Diese Aufgabe wird für die Vorrichtung erfindungsgemäß durch die kennzeichnenden Merkmale des Anspruchs 1 gelöst.

Durch die Ausbildung des Klappenelements als Faltklappe wird vorteilhaft erreicht, daß die Bautiefe in Fahrtrichtung gering ist und zugleich bei gegebenen Bautiefe eine hohe mechanische Stabilität erzielt wird, was insbesondere aufgrund des Staudrucks bei hohen Geschwindigkeiten erwünscht ist.

Erfindungsgemäß sind die erste Klappenhälfte und die zweite Klappenhälfte mittels eines Filmscharniers miteinander verbunden. Ein solches Filmscharnier ist besonders resistent gegen Verschmutzungen und im Vergleich zu herkömmlichen Gelenkscharnieren besonders winddicht.

Erfindungsgemäß umfasst das Klappenelement eine biegsame Folie, wobei die Klappenhälften im wesentlichen jeweils durch flächig auf der Folie aufgebrachte, leistenartige Verstärkungen ausgebildet sind, und wobei das Filmscharnier durch einen zwischen den Verstärkungen angeordneten Bereich der Folie ausgebildet ist. Auf diese Weise ist eine Faltklappe nicht nur stabil und langlebig, sondern auch kostengünstig herstellbar.

Erfindungsgemäß weist die Folie dabei einen Abschlußbereich auf, der bei zumindest einer der Kappenhälften über ein dem Filmscharnier abgewandtes Ende der Verstärkung hinausragt. Insbesondere vorteilhaft sind dabei zumindest zwei Faltklappen vorgesehen, die in einem geschlossenen Zustand der Vorrichtung im wesentlichen in einer Ebene liegen und aneinander angrenzen, wobei durch den Abschlußbereich der Folie eine Abdichtung des Bereich der Angrenzung der beiden Faltklappen ausgebildet ist. Auf diese Weise wird kostengünstig und zuverlässig eine Abdichtung der randseitigen Bereiche der Faltklappe gegen eine andere Faltklappe oder auch gegen das Rahmenelement durch den Überstand der flexiblen Folie ermöglicht.

In einer besonders bevorzugten Ausführungsform besteht die Folie aus einem Kunststoff insbesondere Polyamid. Weiterhin bevorzugt bestehen auch die Verstärkungen aus einem Kunststoff, insbesondere Polyamid. Hierdurch kann die Faltklappe kostengünstig teilweise oder ganz aus Kunststoff, insbesondere durch Spritzguß, hergestellt werden. Polyamid hat sich dabei als besonders langlebig und widerstandsfähig erwiesen. Die Zusammensetzung sowohl der Folie als auch der Verstärkungen aus jeweils dem gleichen Kunststoff ist hinsichtlich der Kosten und der sicheren Verbindung der Komponenten aneinander besonders vorteilhaft.

Weiterhin vorteilhaft kann dabei zumindest der Kunststoff der Verstärkungen Fasern, insbesondere Glasfasern, enthalten. Hierdurch können Lebensdauer und mechanische Belastbarkeit der leistenartigen Verstärkungen verbessert werden.

Insbesondere vorteilhaft sind zur Erzielung einer einfachen und kostengünstigen Herstellung der Faltklappen die Bolzen als einstückige und materialeinheitliche Ausformung der Verstärkungen der Klappenhälften ausgebildet. Somit können die Bolzen im gleichen Verfahrensschritt mit der Ausbildung der Verstärkungen geformt werden.

In einer bevorzugten Ausführungsform der erfindungsgemäßen Vorrichtung ist eine gegenüber dem Rahmenelement bewegbare Steuerschiene vorgesehen, wobei der Bolzen der ersten Klappenhälfte drehbar in der Steuerschiene gelagert ist und der Bolzen der zweiten Klappenhälfte drehbar an dem Rahmenelement gelagert ist. Hierdurch ist durch antreibbare Bewegung der Steuerschiene ein Antrieb einer Schwenkbewegung der Klappenhälften relativ zueinander ermöglicht.

Zur besonders einfachen Ausbildung eines Antriebs kann dabei vorgesehen sein, daß die Steuerschiene mittels eines linearen Antriebs unmittelbar antreibbar ist.

Alternativ oder ergänzend dazu kann die erfindungsgemäße Vorrichtung eine antreibbar drehbare Steuerwelle aufweisen, wobei eine Drehung der Steuerwelle in eine lineare Bewegung der Steuerschiene übertragbar ist. Auf besonders einfache Weise kann die Übertragung der Drehbewegung dabei mittels eines Nockenhebels erfolgen.

Weiterhin kann es vorteilhaft vorgesehen sein, daß die Steuerwelle in Richtung der Luftströmung hinter (oder auch innerhalb) der Faltklappe angeordnet ist, wobei die Faltklappe und die Steuerwelle in einer geöffneten Stellung der Faltklappe in Flucht liegen. Hierdurch ist verhindert, daß die Steuerwelle im geöffneten Klappenzustand einen Luftwiderstand darstellt. Allgemein kann dabei für den Fall, daß zumindest zwei Faltklappen vorgesehen sind, jeder der Faltklappen eine Steuerwelle zugeordnet sein. Zudem kann vorteilhaft vorgesehen sein, daß die in Flucht mit der Faltklappe angeordnete Steuerwelle in der geöffneten Faltklappenstellung mit Endbereichen der Klappenhälften zur Vermeidung eines Bewegungsspiels der geöffneten Faltklappe zusammenwirkt. Ein solches Bewegungsspiel tritt ganz allgemein auf und kann insbesondere bei hohen Geschwindigkeiten in Folge des Fahrtwinds zu Geräuschen oder erhöhten Verschleiß der windbewegten Klappen führen. Faltklappen mit Filmscharnier weisen dabei zumeist ein besonders hohes Bewegungsspiel aufgrund der Flexibilität des Scharniers auf.

Zur Vermeidung eines zuvor beschriebenen Bewegungsspiels kann es unabhängig vom Vorhandensein einer Drehwelle auch allgemein ein insbesondere als Nocken ausgebildetes Haltemittel vorgesehen sein, wobei das Haltemittel in einer geöffneten Faltklappenstellung mit Endbereichen der Klappenhälften zur Vermeidung eines Bewegungsspiels der geöffneten Faltklappe zusammenwirkt. Anstelle von Nocken können auch durchgehende Stangen oder ähnliches vorliegen, wobei grundsätzlich durch die Ausbildung eines Anschlags für die Klappenenden ein Verkippen der geöffneten Faltklappe vermieden oder zumindest verringert ist.

Es kann zudem vorgesehen sein, daß die Steuerwelle mittels einer gelenkigen Verbindung mit einer zweiten Steuerwelle antreibbar verbunden ist, wobei die zweite Steuerwelle winkelig zu der ersten Steuerwelle angeordnet ist. Hierdurch ist es möglich, zwei -zum Beispiel aufgrund der Formgebung der Fahrzeugfront- hinsichtlich ihrer Klappachsen winkelig zueinander stehende Klappenelemente mit der gleichen Antriebsvorrichtung anzutreiben.

In einer weiteren bevorzugten Ausbildung ist die an dem Rahmen gelagerte Klappenhälfte mittels einer Kulissenführung mit der Steuerschiene verbindbar. Dabei wird dem Umstand Rechnung getragen, daß bei einer Bewegung der Steuerschiene zumindest ein Punkt der nicht an der Steuerschiene gelagerten Klappenhälfte genau mit der Steuerschiene mitbewegt wird, wobei sich lediglich der Abstand des Punktes von der Steuerschiene ändert. Durch die genannte Verbindung mittels einer den variablen Abstand berücksichtigenden Kulissenführung kann die Klappe selbst zur Übertragung der Steuerschienenbewegung von einer Seite auf die andere benutzt werden. Hierdurch ist es ermöglicht, die Faltklappe nur auf einer Seite anzutreiben, ohne daß die zumindest bei langen Faltklappen sonst unvermeidliche Gefahr einer Verdrehung und Verklemmung besteht. Aufgrund des so ermöglichten Antriebs nur einer Steuerschiene kann auf eine Steuerwelle bzw. Andere Arten der Übertragung von Kräften auf eine zweite Steuerschiene verzichtet werden.

Im allgemeinen ist es jedoch bevorzugt vorgesehen, daß den hinsichtlich der Steuerschiene jenseitigen Schmalseiten der Faltklappe eine weitere Steuerschiene zugeordnet ist. Hierdurch wird ein Antrieb an beiden Schmalseiten der Faltklappen ermöglicht, wodurch ein Verdrehen und/oder Verklemmen der Faltklappen vermieden wird.

Je nach zur Verfügung stehendem Bauraum kann dabei ein die beiden Steuerschienen fest miteinander verbindendes Brückenelement vorgesehen sein, wodurch auf einfache Weise ein simultaner Antrieb der Steuerschienen realisierbar ist. Es kann auch mehr als ein Brückenelement vorgesehen sein, so daß die Steuerschienen insgesamt als geschlossener Rahmen ausgebildet sein können.

Allgemein kann je nach Anforderungen der Bolzen der ersten Klappenhälfte einen anderen Abstand zu der Klappachse aufweisen als der Bolzen der zweiten Klappenhälfte. Durch diese somit asymmetrisch plazierten Bolzen ist die geöffnete Faltklappe nicht mehr senkrecht zur Verbindungslinie der Bolzen orientiert. Dies ermöglicht etwa einen geneigten Einbau des Rahmenelements unter Beibehaltung einer zur Fahrtrichtung parallelen Ausrichtung der geöffneten Faltklappen.

Ferner kann es allgemein vorgesehen sein, daß zumindest zwei benachbarte Faltklappen vorgesehen sind, wobei die Klappenhälfte der einen Faltklappe im Zuge einer Öffnungsbewegung gegenläufig zu den Klappenhälften der anderen Faltklappe verschwenken. Hierdurch ist auf einfache Weise eine Überlappung von Endbereichen der geschlossenen benachbarten Faltklappen und somit eine besonders gute Abdichtung gegen den Luftstrom erzielbar.

Weiterhin kann es allgemein vorgesehen sein, daß die Faltklappe in Richtung ihrer Klappachse bewegbar aufgenommen ist, wobei die Klappenälften jeweils mit zueinander konvergierenden Führungen verbunden sind, so daß eine Bewegung der Faltklappe in der Klappachsenrichtung mit einer Öffnungs- oder Schließbewegung der Faltklappe korreliert ist. Eine solche zwangsgesteuerte Verbindung ergibt eine besonders hohe Sicherheit gegen ein Verdrehen und Verklemmen der Faltklappe. Zudem kann auf das Vorsehen einer Steuerwelle verzichtet werden.

Ebenso kann es allgemein vorgesehen sein, daß eine zweite Faltklappe vorgesehen ist, wobei eine Öffnungsbewegung der zweiten Faltklappe mittels eines mechanischen Steuermittels gegenüber der Öffnungsbewegung der ersten Faltklappe verzögerbar ist. Hierdurch ist eine besonders große Flexibilität bei der Freigabe der Luftöffnung erzielbar, wobei insbesondere eine nur teilweise Freigabe des Luftdurchtritts erzielt werden kann, bei der sich sämtliche Faltklappen in einer mechanisch sicheren Endstellung befinden.

Auf bevorzugte Weise umfaßt das Steuermittel dabei eine Drehwelle und eine die Drehwelle umfangende Hohlwelle, wobei ein mit der Drehwelle verbundener Zapfen ab einer bestimmten Winkelstellung der Drehwelle einen mit der Hohlwelle verbundenen Zapfen mitnimmt. Hierdurch ist eine einfache und Bauraum sparende Mechanik zur verzögerten Ansteuerung verschiedener Faltklappen realisierbar.

Die Aufgabe der Erfindung wird für das Verfahren zur Herstellung einer Faltklappe erfindungsgemäß mit den Merkmalen des Anspruchs 28 gelöst.

Dabei werden durch die Verwendung einer im allgemein preisgünstigen, im Idealfall vorkonfektioniert bereitstehenden Folie, auf die Verstärkungen aufgespritzt werden, die Herstellungskosten niedrig gehalten. Insbesondere können beide Klappenhälften in einem Arbeitsgang aufgespritzt werden, wobei zudem nur eine Spritzform erforderlich ist.

Bevorzugt besteht der Verfahrensschritt des Herrichtens der Folie im wesentlichen aus einem Ausschneiden bzw. Ausstanzen aus einem Endlosband, wodurch die Folienkosten besonders niedrig gehalten werden.

Besonders bevorzugt ist der zweite Kunststoff im wesentlichen der gleiche Kunststoff wie der erste Kunststoff. Hierdurch ist auf einfache Weise eine besonders sichere Verbindung von Folie und Verstärkung gewährleistet, weil gleiche Kunststoffe besonders vollständig miteinander vernetzen. In diesem Sinne ist es ausreichend, wenn der zweite Kunststoff dem ersten hinsichtlich seiner Grundformel entspricht, wobei Abweichungen insbesondere hinsichtlich einer Oligomerverteilung und Zusätzen wie etwa Weichmachern außer Betracht vorliegen können. Somit kann vorteilhaft die gute Haftung im Sinne einer molekularen Verbindung erzielt werden, wobei dennoch den unterschiedlichen Anforderungen an Folie bzw. Filmscharnier und an den Bereich der Verstärkungen Rechnung getragen wird. Insbesondere kann der erste Kunststoff bei gleicher Grundformel weicher sein als der zweite Kunststoff. Ebenso kann der zweite Kunststoff ohne Änderung der Grundformel in vorliegendem Sinne Zusätze wie etwa Fasern, insbesondere Glasfasern enthalten, wodurch seine mechanische Belastbarkeit weiter verbessert wird.

Bevorzugt ist der erste Kunststoff aufgrund seiner mechanischen Belastbarkeit Polyamid. Aus vorgenannten Gründen ist insbesondere bevorzugt auch der zweite Kunststoff Polyamid.

Weitere Vorteile und Merkmale von erfindungsgemäßer Vorrichtung und Verfahren ergeben sich aus den nachfolgend beschriebenen Ausführungsbeispielen sowie aus den abhängigen Ansprüchen.

Nachfolgend wird ein bevorzugtes Ausführungsbeispiel einer erfindungsgemäßen Vorrichtung mit mehreren bevorzugten Abwandlungen beschrieben und anhand der anliegenden Zeichnungen näher erläutert.
- Fig. 1: zeigt ein Ausführungsbeispiel einer erfindungsgemäßen Vorrich- tung mit vier Faltklappen in einer geöffneten Stellung.
- Fig. 2: zeigt die Vorrichtung aus Fig. 1 in einer geschlossenen Stellung.
- Fig. 3: zeigt eine Detailansicht einer bevorzugt ausgebildeten Faltklappe der Vorrichtung aus Fig. 1.
- Fig. 4: zeigt eine Abwandlung einer Faltklappe mit einer fluchtend ange- ordneten Drehwelle in geschlossener und in geöffneter Klappen- position.
- Fig. 5: zeigt eine weitere Abwandlung von Faltklappen mit Haltemitteln in geschlossener und geöffneter Position.
- Fig. 6: zeigt eine Abwandlung mit drei abwechselnd gegenläufig ange- ordneten Faltklappen in geschlossener und geöffneter Position.
- Fig. 7: zeigt eine Abwandlung einer Faltklappe mit bezüglich der Klap- pachse asymmetrisch angeordneten Bolzen in geschlossener und geöffneter Position.
- Fig. 8: zeigt eine Abwandlung einer erfindungsgemäßen Vorrichtung mit zwei winkelig zueinander angeordneten verbundenen Steuerwel- len.
- Fig. 9: zeigt eine Detailansicht des Rahmens einer erfindungsgemäßen Vorrichtung mit einer Steuerschiene in geschlossener und in ge- öffneter Position.
- Fig. 10: zeigt ein Detail einer Abwandlung einer erfindungsgemäßen Vor- richtung, bei der zwei fest miteinander verbundene Steuerschie- nen voeliegen.
- Fig. 11: zeigt eine Abwandlung einer in einer Kulissenführung zusätzlich geführten Klappenhälfte in geschlossener und in geöffneter Posi- tion.
- Fig. 12: zeigt eine Abwandlung einer erfindungsgemäßen Vorrichtung, bei der die Faltklappe in Richtung der Klappachse bewegbar ist.
- Fig. 13: zeigt ein Steuermittel zur verzögerten Ansteuerung zweier Falt- klappen.
- Fig. 14: zeigt eine Abwandlung einer Faltklappe, bei der ein besonders großer Schwenkwinkel ermöglicht ist.

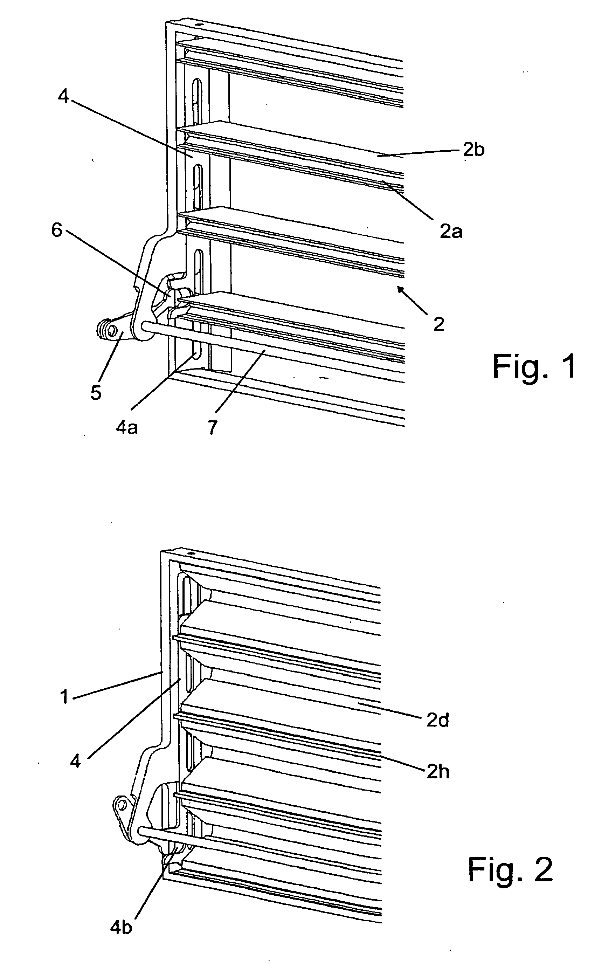

Das Ausführungsbeispiel einer erfindungsgemäßen Vorrichtung gemäß Fig. 1 und Fig. 2 umfaßt ein kastenförmiges Rahmenelement 1, das eine äußere Grenze eines Luftdurchtritts definiert. Innerhalb des Rahmenelements 1 sind vier Faltklappen 2 angeordnet. Jede der Faltklappen 2 umfaßt eine erste Klappenhälfte 2a und eine zweite Klappenhälfte 2b.

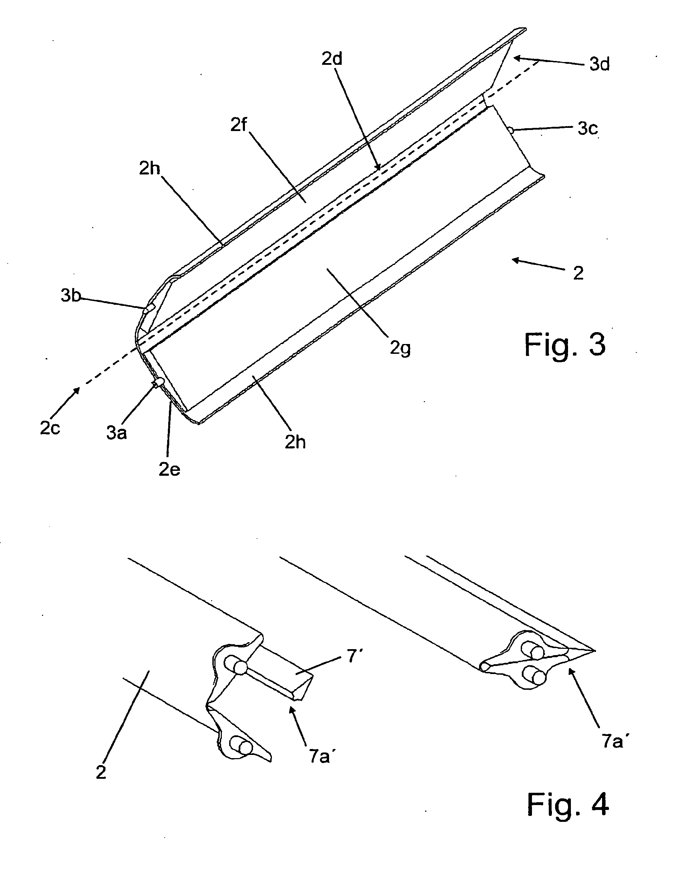

Jede der Klappenhälften 2a, 2b (siehe auch Fig. 3) weist an jeder ihrer Schmalseiten bzw. seitlichen Stirnflächen je einen Bolzen 3a, 3b, 3c, 3d auf. Die erste Klappenhälfte 2a ist mittels der Bolzen 3a, 3c in einer Steuerschiene 4 drehbar aufgenommen. Die Steuerschiene 4 ist innenseitig des Rahmenelements 1 geführt. Die zweite Klappenhälfte 2b ist mittels ihrer Bolzen 3b, 3d drehbar an dem Rahmenelement 1 aufgenommen. Da sich die Bolzen 3b, 3d auf Höhe der Steuerschiene 4 befinden, sind in der gegenüber dem Rahmenelement in ihrer Längsrichtung bewegbaren Steuerschiene 4 Langlöcher 4a vorgesehen. Die Langlöcher 4a werden jeweils von einem in dem Rahmenelement 1 gelagerten Bolzen 3b, 3d durchgriffen.

Durch eine Bewegung der Steuerschiene 4 relativ zu dem Rahmenelement 1 wird somit der Abstand der Bolzenpaare 3a, 3b und 3c, 3d verändert, was zu einem Verschwenken der Klappenhälften 2a, 2b relativ zueinander um eine Klappachse 2c (Fig. 3) der Faltklappe 2 führt.

Im Bereich der Klappachse 2c umfaßt die Faltklappe 2 vorliegend ein Filmscharnier 2d Bei der bevorzugten Ausführung der Faltklappe gemäß Fig. 3 ist die Faltklappe dabei wie folgt aufgebaut:

Eine Seite der Faltklappe 2 wird von einer durchgehenden, aus Polyamid bestehenden Folie 2e ausgebildet. Auf die Folie sind Verstärkungen 2f, 2g aufgebracht, die aus einem glasfaserverstärkten und härteren Polyamid bestehen als die Folie 2e. Die Bolzen 3a, 3b, 3c, 3d sind jeweils einstückig und materialeinheitlich mit den Verstärkungen 2f, 2g an deren schmalen, seitlichen Stirnseiten ausgebildet. Zwischen den Verstärkungen 2f, 2g verbleibt ein schmaler freier Bereich der Folie, durch den aufgrund der Biegsamkeit der Folie 2e das Filmscharnier 2d gebildet ist.

Zudem überlappt die Folie 2e in ihren Endbereichen 2h jeweils die Verstärkungen 2f, 2g um ein kurzes Stück. Dieser Überstand dient im geschlossenen Zustand der Faltklappen 2 (siehe Fig. 2) zu einer besonders guten Abdichtung der Bereiche zweier benachbarter, aneinanderstoßender Faltklappen 2.

Aus Fig. 1 und Fig. 2 ist zudem ein bevorzugter Mechanismus zum Antrieb der linearen Bewegung der in einer Ausnehmung des Rahmenelements 1 gleitgeführten Steuerschiene 4 ersichtlich. Dabei weist das Rahmenelement 1 eine Halterung auf, in der ein Nockenhebel 5 drehbar gelagert ist. Der Nockenhebel 5 ist über einen nicht gezeigten Linearantrieb antreibbar verschwenkbar. Ein Fortsatz des Nockenhebels 5 endet in einem runden Nokken 6. Dieser greift in eine korrespondierende Ausnehmung 4b der Steuerschiene 4 ein, wodurch eine Drehbewegung des Nockenhebels 5 in eine lineare Bewegung der Steuerschiene 4 übertragbar ist.

Die Drehachse des Nockenhebels 5 umfaßt eine Steuerwelle 7, welche zu einer in Fig. 1, Fig. 2 nicht gezeigten gegenüberliegenden Seite des Rahmenelements 1 führt. Dort ist die Steuerwelle 7 in symmetrischer Anordnung mit einem zweiten Nockenhebel verbunden, welcher eine zweite, der gegenüberliegenden Seite der Faltklappen zugeordnete Steuerschiene antreibt. Hinsichtlich der Symmetrie der nicht explizit dargestellten Anordnung liegt lediglich der Unterschied vor, daß der zweite Nockenhebel keinen eigenen Antrieb aufweist.

In einer alternativen bevorzugten Ausbildung gemäß Fig. 4 ist die Steuerwelle 7' hinsichtlich des Luftstroms hinter der Faltklappe 2 und in Flucht mit der geöffneten Faltklappe angeordnet. Hierdurch stellt die Steuerwelle 7' keinen Strömungswiderstand für die Luft dar. Besonders vorteilhaft liegt die Steuerwelle 7' im geöffneten Klappenzustand, also bei aufeinander verschwenkten Klappenhälften 2a, 2b, jeweils an einem Endbereich jeder der Klappenhälften 2a, 2b an. Hierdurch wird ein Verkippeln bzw. ein Bewegungspiel der geöffneten Faltklappe 2, bei der die Bolzen nunmehr einen minimalen Abstand haben, vermieden. Besonders vorteilhaft weist dabei die Steuerwelle 7' eine entsprechende Profilierung 7a' auf, die mit der Form der Endbereiche der Klappenhälften 2a, 2b korrespondiert.

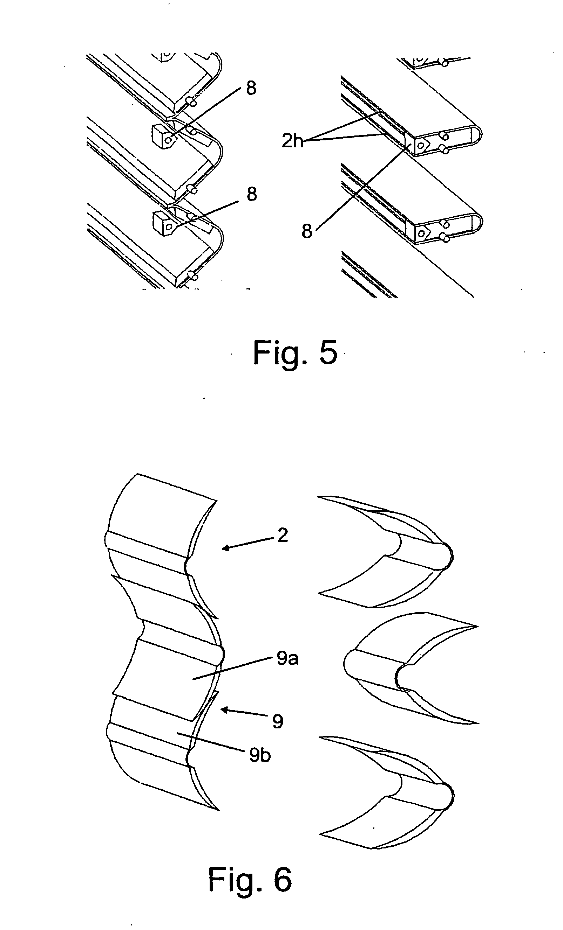

Eine ähnliche, jedoch vom Vorliegen einer Steuerwelle unabhängige Lösung zur kippsicheren Halterung der geöffneten Faltklappe 2 zeigt die Abwandlung gemäß Fig. 5.. Dabei sind entweder an der Steuerschiene 4 oder an dem Rahmenelement 1 nockenartige Haltemittel 8 befestigt, die mit den hinteren Endbereichen der geöffneten Faltklappe 2 zusammenwirken. Bevorzugt liegen die Haltemittel dabei auch an den zuvor beschriebenen überstehenden Bereichen der Folie 2e an, wodurch aufgrund der Flexibilität der Folie eine gute Schwingungsdämpfung vorliegt.

In weiterer Abwandlung gemäß Fig. 6 sind die benachbart angeordneten Faltklappen 2 (hier insgesamt drei Faltklappen) wechselweise gegenläufig orientiert. Hierdurch läßt sich ein besonders großer und somit luftdichter Bereich 9 einer Überlappung zweier angrenzender, zu verschiedenen Faltklappen gehörender Klappenhälften 9a, 9b erzielen.

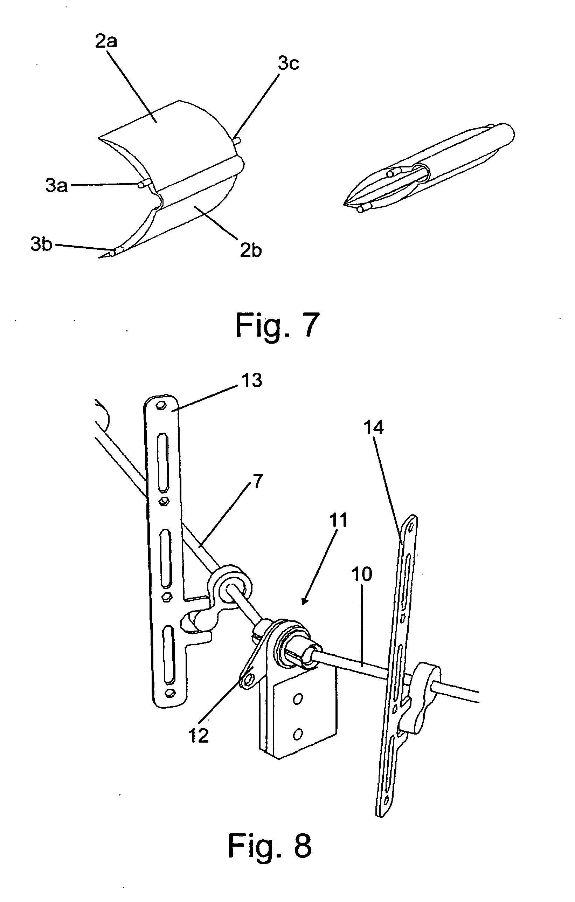

Die in Fig. 7 gezeigte abgewandelte Faltklappe weist hinsichtlich der Plazierung der Bolzen 3a, 3b eine Asymmetrie auf. Der Bolzen 3a hat sichtbar einen geringeren Abstand zur Klappachse als der auf gleicher Seite der anderen Klappenhälfte 2b zugeordnete Bolzen 3b. Hierdurch ist ein vom rechten Winkel abweichender Schiefstand zumindest der geöffneten Faltklappe 2 bezüglich der Verbindungslinie der Bolzen 3a, 3b bzw. des Rahmenelements erzielt. Je weiter die Klappenhälften voneinander wegschwenken, die Faltklappe also geschlossen wird, um so weniger Auswirkungen des Symmetriebruchs bestehen im Vergleich zur symmetrischen Lösung (etwa Fig.2).

Bei der in Fig. 8 gezeigten Abwandlung handelt es sich um eine gelenkige, insbesondere kardanische Verbindung einer zuvor beschriebenen Steuerwelle 7 mit einer weiteren Steuerwelle 10. Die kardanische Verbindung 11 umfaßt zudem einen Antriebsheben 12 zum simultanen Antrieb der Steuerwellen 7, 10. Jeder der Steuerwellen sind Sätze von Faltklappen zugeordnet, die jeweils in zueinander winkelig angeordneten Ebenen liegen, so daß die in Fig. 8 nur teilweise dargestellte Vorrichtung insgesamt an einen geknickten oder stark gebogenen Verlauf einer Kontur, etwa Fahrzeugfront oder Kühler, angepaßt ist. Die gezeigten Steuerschienen 13, 14 gehören dabei jeweils zu den beiden gewinkelten Sätzen von Faltklappen.

Die Detaildarstellung von Rahmenelement 1 und Steuerschiene 4 mit Nokkenhebel 5 zeigt, daß bei geeigneter Anpassung der Form des Nockenhebels, gegebenenfalls unter Einbeziehung eines weiteren, nicht dargestellten Stabgetriebes erreichbar ist, daß die umgelenkte Kraft eines Antriebs in zumindest einer Endstellung der Faltklappen, bevorzugt jedoch in beiden Endstellungen besonders groß oder maximal ist. Durch die optimierte Hebelwirkung des Nockenhebels 5 wird somit eine besonders sichere Halterung der Faltklappen in den Endstellungen erreicht, wobei die Faltklappen in der Praxis zumeist vollständig geöffnet oder vollständig geschlossen sind.

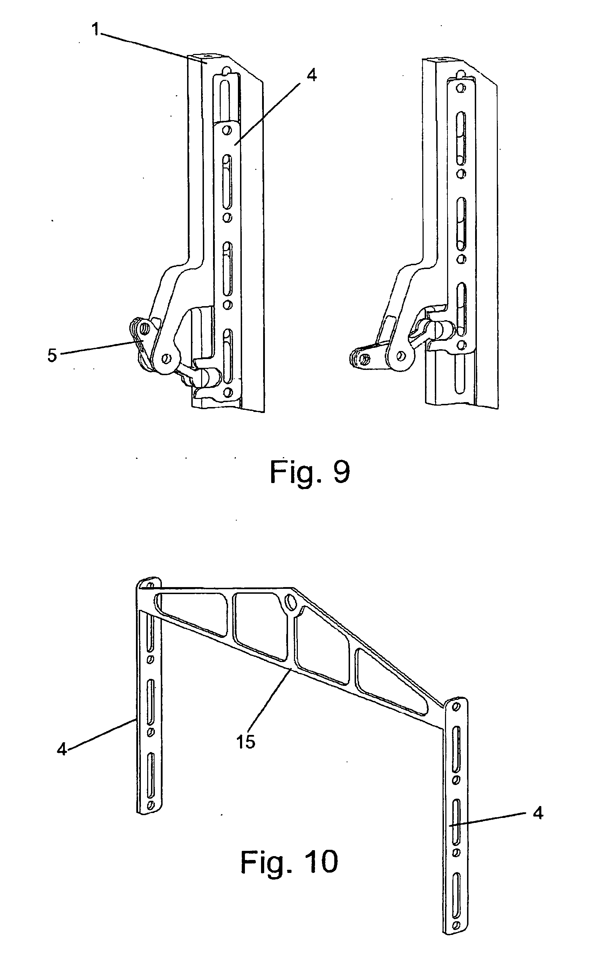

Gemäß Fig. 10 ist gezeigt, daß gegenüberliegende und dem gleichen Satz von Faltklappen zugeordnete Steuerschienen 4 mit einem Brückenelement 15 fest verbunden sein können, so daß ein simultaner Antrieb der Steuerschienen zur Vermeidung einer Verdrehung oder Verklemmung der Faltklappen auf einfache Weise realisiert ist.

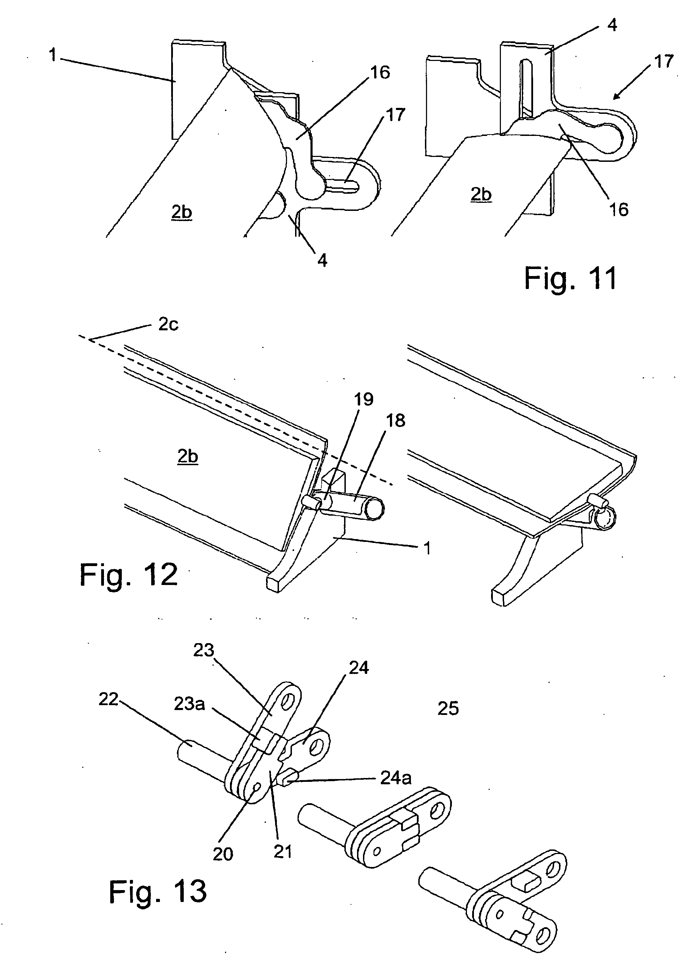

In der in Fig. 11 gezeigten Abwandlung ist lediglich eine im Rahmenelement 1 drehgelagerte Faltklappenhälfte 2b gezeigt. Die Klappenhälfte 2b weist einen Führungsarm 16 auf, der mit einem Gleitbolzen in einer an der Steuerschiene 4 ausgebildeten Kulissenführung 17 geführt ist. Die Schlitzung der Kulissenführung 17 ist senkrecht zu Bewegungsrichtung der Steuerschiene 4 orientiert. Der Führungsarm 16 ist so positioniert, daß der Gleitbolzen in Projektion mit der Steuerschiene mitläuft und lediglich sein senkrechter Abstand zu der Steuerschiene veränderbar ist. Diese Abstandsänderung wird durch die senkrecht zur Bewegungsrichtung der Steuerschiene geschlitzte Kulisse 17 ausgeglichen. Insgesamt ist somit eine zusätzliche Zwangsführung der Klappenhälfte 2b gegeben, was eine Übertragung der Steuerschienenbewegung von einer Seite auf die andere ermöglicht. Eine Anordnung gemäß Fig. 11 ist somit geeignet, nur auf einer Seite einen Antrieb für die Steuerschiene 4 vorzusehen, wogegen die entsprechende Steuerschienenführung auf der gegenüberliegenden Seite des Rahmenelements durch die Bewegungen der Klappen selbst angetrieben wird, ohne daß ein Verklemmen der Faltklappen 2 auftritt. Es kann auch ganz auf eine Steuerschiene auf der gegenüberliegenden Seite des Rahmenelements 1 verzichtet werden, etwa indem die erste Klappenhälfte 2a dort in einem Langloch des Rahmenelements geführt ist.

In einer gemäß Fig. 12 weiteren Abwandlung einer Faltklappe 2 ist diese gegenüber dem Rahmenelement 1 in Richtung ihrer Klappachse 2c bewegbar gelagert. Gezeigt ist in Fig. 12 nur die eine Klappenhälfte 2b. Mittels eines an der Klappenhälfte 2b vorgesehenen Kugelgelenks 19 ist die Klappenhälfte 2b an einer schräg stehenden Führung 18 aufgenommen. Die nichtdargestellte korrespondierende Führung der anderen Klappenhälfte konvergiert in ihrer Orientierung mit der Führung 18, so daß eine Bewegung der Faltklappe in Richtung der Klappachse 2c eine Veränderung des Abstandes der korrespondierenden Kugelgelenke 19, (nicht dargestellt) bewirkt und somit eine relative Verschwenkung der Klappenhälften um die Klappachse 2c. Eine solche Kinematik ist insbesondere gegen Verklemmen besonders sicher.

Fig. 13 zeigt ein Detail einer abgewandelten Antriebsmechanik einer erfindungsgemäßen Vorrichtung. Dabei umfaßt die Vorrichtung zumindest zwei Faltklappen, welche nicht simultan, sondern nacheinander oder zumindest verzögert zueinander geöffnet bzw. geschlossen werden sollen. Dabei ist eine antreibbare Drehwelle 20 vorgesehen, welche endseitig einen fest verbundenen ersten Zapfen 21 aufweist. Mittels zumindest einer Hohlwelle 22 ist ein zweiter Zapfen 23 konzentrisch zu der Drehwelle, aber drehbar zu dieser vorgesehen. Auf gleiche Weise ist ein dritter, auch zu dem zweiten Zapfen drehbarer Zapfen 24 vorgesehen. Mitnehmernocken 23a, 24a sind jeweils an dem zweiten Zapfen und an dem dritten Zapfen vorgesehen.

Mittels nicht dargestellter Federn werden der zweite Zapfen 23 und der dritte Zapfen 24 immer in eine der mittleren Position in Fig. 13 entsprechenden Mittelstellung bzw. Neutralstellung kraftbeaufschlagt.

Mittels weiterer, nicht dargestellter Komponenten ist der zweite Zapfen 23 mit einer ersten Faltklappe und der dritte Zapfen 24 mit einer zweiten Faltklappe verbunden. Eine Drehung der Drehwelle 22 bewirkt nunmehr durch Zusammenwirken des ersten Zapfens 21 mit den Mitnehmernocken 23a, 24a zunächst eine Bewegung der ersten Faltklappe bzw. des zweiten Zapfens 23 und nach Abschluß dieser Bewegung eine Bewegung der zweiten Faltklappe bzw. des dritten Zapfens 24 (siehe Positionen der Steuermechanik in Fig. 13 von links nach rechts).

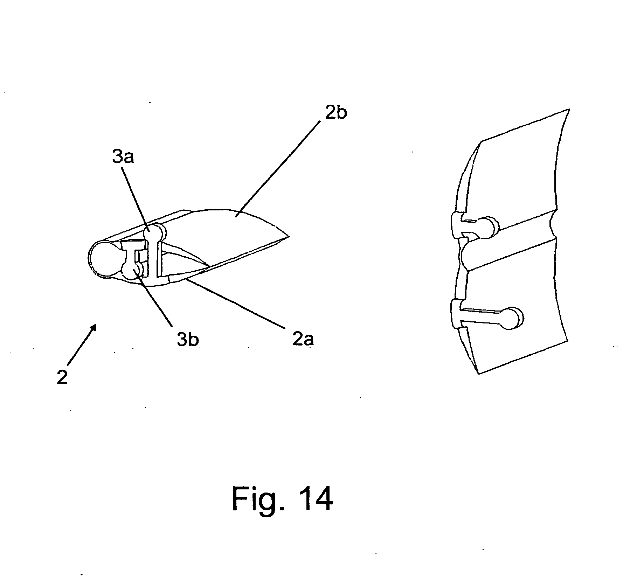

Fig. 14 zeigt eine weitere Abwandlung, bei der die Bolzen 3a, 3b der Klappenhälften 2a, 2b mittels entsprechender stegartiger Ausformungen deutlich außerhalb einer jeweilige Klappenhälftenebene angeordnet sind. Hierdurch läßt sich zum einen ein besonders großer Winkel, insbesondere genau 180 Grad zwischen den Klappenhälften in der (bezüglich des Luftstroms) geschlossenen Position erreichen, ohne daß die Kraftumlenkung zu ungünstig wird. Zum anderen kann, wie ersichtlich ist, der eine Bolzen 3a einen anderen Abstand von seiner Klappenhälftenebene aufweisen als der andere Bolzen 3b. Somit kann der dem Rahmenelement zugeordnete Bolzen jenseits der Steuerschiene aufgenommen sein, so daß auf Langlöcher in der Steuerschiene verzichtet werden kann.

Es versteht sich, daß je nach gegebenen Anforderungen die geschilderten Merkmale und Abwandlungen frei untereinander kombinierbar sind. Es versteht sich auch, daß jede erfindungsgemäße Faltklappe genau zwei Klappenhälften oder aber auch drei oder mehr Klappenhälften umfassen kann, wobei dann vorzugsweise jeweils zwei benachbarte Klappenhälften scharnierartig miteinander verbunden sind, so daß jeweils eine Klappenhälfte um eine Klappachse relativ zu einer oder zwei benachbarten Klappenhälften verschwenkbar ist.

## Patentansprüche

1. Vorrichtung zur Regulierung eines Luftstroms zur Motorkühlung, umfassend
ein eine Durchtrittsfläche des Luftstroms zumindest teilweise umfangendes Rahmenelement (1) und
zumindest ein gegenüber dem Rahmenelement (1) verstellbar aufgenommenes Klappenelement (2), wobei die Durchtrittsfläche für den Luftstrom durch eine Verstellung des Klappenelements (2) veränderbar ist,
**dadurch gekennzeichnet,**
**dass** das Klappenelement als Faltklappe (2) mit einer ersten Klappenhälfte (2a) und einer zweiten, mit der ersten Klappenhälfte scharnierartig verbundenen Klappenhälfte (2b) ausgebildet ist, so dass die erste Klappenhälfte (2a) um eine Klappachse (2c) relativ zu der zweiten Klappenhälfte (2b) verschwenkbar ist, wobei die erste Klappenhälfte (2a) und die zweite Klappenhälfte (2b) mittels eines Filmscharniers (2d) miteinander verbunden sind und dass das Klappenelement (2) eine biegsame Folie (2e) umfasst, wobei die Klappenhälften (2a, 2b) im Wesentlichen jeweils durch flächig auf der Folie (2e) aufgebrachte, leistenartige Verstärkungen (2g, 2f) ausgebildet sind, und wobei das Filmscharnier (2d) durch einen zwischen den Verstärkungen (2g, 2f) angeordneten Bereich der Folie ausgebildet ist und die Folie einen Abschlussbereich (2h) aufweist, der bei zumindest einer der Klappenhälften (2a, 2b) über ein dem Filmscharnier (2d) abgewandtes Ende der Verstärkung (2g, 2f) hinausragt.

2. Vorrichtung nach Anspruch 1, **dadurch gekennzeichnet, dass** an einer Schmalseite jeder der Klappenhälften (2a, 2b) ein Bolzen (3a, 3b) zur drehbaren Lagerung der Klappenhälften ausgebildet ist.

3. Vorrichtung nach Anspruch 1, **dadurch gekennzeichnet, dass** zumindest zwei Faltklappen (2) vorgesehen sind, die in einem geschlossenen Zustand der Vorrichtung im Wesentlichen in einer Ebene liegen und aneinander angrenzen, wobei durch den Abschlussbereich (2h) der Folie eine Abdichtung des Bereichs der Angrenzung der beiden Faltklappen (2) ausgebildet ist.

4. Vorrichtung nach einem der Ansprüche 1 oder 3, **dadurch gekennzeichnet, dass** die Folie (2e) aus einem Kunststoff, insbesondere aus Polyamid, besteht.

5. Vorrichtung nach einem der Ansprüche 1 oder 3 bis 4, **dadurch gekennzeichnet, dass** die Verstärkungen (2g, 2f) aus einem Kunststoff, insbesondere Polyamid, bestehen.

6. Vorrichtung nach Anspruch 5, **dadurch gekennzeichnet, dass** der Kunststoff der Verstärkungen zudem Fasern, insbesondere Glasfasern zur Verbesserung der mechanischen Eigenschaften der Verstärkungen (2g, 2f) enthält.

7. Vorrichtung nach einem der Ansprüche 1 oder 3 bis 6, **dadurch gekennzeichnet, dass** die Bolzen (3a, 3b) als einstückige und materialeinheitliche Ausformungen der leistenartigen Verstärkungen (2g, 2f) ausgebildet sind.

8. Vorrichtung nach einem der Ansprüche 2 bis 7, **dadurch gekennzeichnet, dass** eine gegenüber dem Rahmenelement (1) bewegbare Steuerschiene (4) vorgesehen ist, wobei der Bolzen (3a) der ersten Klappenhälfte (2a) drehbar in der Steuerschiene (4) gelagert ist und der Bolzen (3b) der zweiten Klappenhälfte (2b) drehbar an dem Rahmenelement (1) gelagert ist.

9. Vorrichtung nach Anspruch 8, **dadurch gekennzeichnet, dass** die Steuerschiene (4) mittels eines linearen Antriebs unmittelbar antreibbar ist.

10. Vorrichtung nach Anspruch 8, **dadurch gekennzeichnet, dass** eine antreibbar drehbare Steuerwelle (7) vorgesehen ist, wobei die Drehung der Steuerwelle in eine lineare Bewegung der Steuerschiene (4) übertragbar ist.

11. Vorrichtung nach Anspruch 10, **dadurch gekennzeichnet, dass** die Übertragung der Drehbewegung in die Linearbewegung mittels eines Nockenhebels (5) erfolgt.

12. Vorrichtung nach Anspruch 10 oder 11, **dadurch gekennzeichnet, dass** die Steuerwelle (7) in Richtung der Luftströmung hinter der Faltklappe (2) angeordnet ist, wobei die Faltklappe (2) und die Steuerwelle (7) in einer geöffneten Stellung der Faltklappe in Flucht liegen.

13. Vorrichtung nach einem der Ansprüche 10 bis 12, **dadurch gekennzeichnet, dass** die Steuerwelle (7) innerhalb der geöffneten Faltklappe (2) angeordnet ist.

14. Vorrichtung nach Anspruch 12 oder 13, **dadurch gekennzeichnet, dass** die Steuerwelle (7) in der geöffneten Faltklappenstellung mit Endbereichen (2h) der Klappenhälften (2a, 2b) zur Vermeidung eines Bewegungsspiels der geöffneten Faltklappe zusammenwirkt.

15. Vorrichtung nach einem der Ansprüche 10 bis 14, **dadurch gekennzeichnet, dass** zumindest zwei Faltklappen (2) vorgesehen sind, wobei jeder der zwei Faltklappen jeweils eine Steuerwelle (7) zugeordnet ist.

16. Vorrichtung nach einem der Ansprüche 10 bis 15, **dadurch gekennzeichnet, dass** die Steuerwelle (7) mittels einer gelenkigen Verbindung (11) mit einer zweiten Steuerwelle (10) antreibbar verbunden ist, wobei die zweite Steuerwelle (10) winkelig zu der ersten Steuerwelle (7) angeordnet ist.

17. Vorrichtung nach einem der Ansprüche 8 bis 16, **dadurch gekennzeichnet, dass** die an dem Rahmen (1) gelagerte Klappenhälfte (2b) mittels einer Kulissenführung (17) mit der Steuerschiene verbindbar ist.

18. Vorrichtung nach einem der Ansprüche 8 bis 17, **dadurch gekennzeichnet, dass** den hinsichtlich der Steuerschiene (4) jenseitigen Schmalseiten der Faltklappe eine weitere Steuerschiene (4) zugeordnet ist.

19. Vorrichtung nach Anspruch 18, **dadurch gekennzeichnet, dass** die Steuerschiene (4) und die weitere Steuerschiene (4) mittels zumindest eines Brückenelements (15) fest miteinander verbunden sind.

20. Vorrichtung nach einem der Ansprüche 2 bis 19, **dadurch gekennzeichnet, dass** ein insbesondere als Nocken ausgebildetes Haltemittel (8) vorgesehen ist, wobei das Haltemittel in einer geöffneten Faltklappenstellung mit Endbereichen (2h) der Klappenhälften zur Vermeidung eines Bewegungsspiels der geöffneten Faltklappe (2) zusammenwirkt.

21. Vorrichtung nach einem der Ansprüche 2 bis 20, **dadurch gekennzeichnet, dass** der Bolzen (3a) der ersten Klappenhälfte (2a) einen anderen Abstand zu der Klappachse (2c) aufweist als der Bolzen (3b) der zweiten Klappenhälfte (2b).

22. Vorrichtung nach einem der Ansprüche 1 bis 21, **dadurch gekennzeichnet, dass** zumindest zwei benachbarte Faltklappen (2) vorgesehen sind, wobei die Klappenhälften (2a, 2b) der einen Faltklappen im Zuge einer Öffnungsbewegung gegenläufig zu den Klappenhälften (2a, 2b) der anderen Faltklappe verschwenken.

23. Vorrichtung nach einem der Ansprüche 1 bis 22, **dadurch gekennzeichnet, dass** die Faltklappe (2) in Richtung ihrer Klappachse (2c) bewegbar aufgenommen ist, wobei die Klappenhälften (2a, 2b) jeweils mit zueinander konvergierenden Führungen (18) verbunden sind, so dass eine Bewegung der Faltklappe in der Klappachsenrichtung mit einer Öffnungs- oder Schließbewegung der Faltklappe korreliert ist.

24. Vorrichtung nach einem der Ansprüche 1 bis 23, **dadurch gekennzeichnet, dass** eine zweite Faltklappe vorgesehen ist, wobei eine Öffnungsbewegung der zweiten Faltklappe mittels eines mechanischen Steuermittels (25) gegenüber der Öffnungsbewegung der ersten Faltklappe verzögerbar ist.

25. Vorrichtung nach Anspruch 24, **dadurch gekennzeichnet, dass** das Steuermittel (25) eine Drehwelle (20) und eine die Drehwelle umfangende Hohlwelle (22) umfasst, wobei ein mit der Drehwelle verbundener Zapfen (21) ab einer bestimmten Winkelstellung der Drehwelle einen mit der Hohlwelle (22) verbundenen Zapfen (23, 24) mitnimmt.

26. Verfahren zur Herstellung einer Faltklappe für eine Vorrichtung nach einem der Ansprüche 1 bis 24, umfassend folgende Schritte:
a. Herrichtung einer aus einem ersten Kunststoff bestehenden Folie (2e).
b. Einbringen der Folie (2e) in eine Spritzform
c. Aufspritzen von leistenartigen Verstärkungen (2g, 2f) aus einem zweiten Kunststoff auf die Folie.

27. Verfahren nach Anspruch 26, **frch gekennzeichnet, dass** der Verfahrensschritt a. ein Ausschneiden der Folie aus einem Endlosband umfasst.

28. Verfahren nach Anspruch 26 oder 27, **dadurch gekennzeichnet, dass** der zweite Kunststoff im Wesentlichen der gleiche Kunststoff wie der erste Kunststoff ist.

29. Verfahren nach Anspruch 28, **dadurch gekennzeichnet, dass** der zweite Kunststoff dem ersten Kunststoff hinsichtlich seiner Grundformel entspricht, wobei Abweichungen insbesondere hinsichtlich einer Oligomerverteilung und Zusätzen wie etwa Weichmachern außer Betracht vorliegen können.

30. Verfahren nach einem der Ansprüche 26 bis 29, **dadurch gekennzeichnet, dass** der erste Kunststoff Polyamid ist.

31. Verfahren nach einem der Ansprüche 26 bis 30, **dadurch gekennzeichnet, dass** der zweite Kunststoff Polyamid ist.

32. Verfahren nach einem der Ansprüche 26 bis 31, **dadurch gekennzeichnet, dass** der zweite Kunststoff einen seine mechanische Belastbarkeit vergrößernden Zusatz, insbesondere Glasfasern, enthält.

## Claims

1. A device for regulating an air flow for engine cooling, comprising a frame element (1) which at least partially encloses a passage surface of the air flow, and at least one shutter element (2) which is accommodated such that it is adjustable relative to the frame element (1), wherein the passage surface for the air flow can be changed by adjusting the shutter element (2), **characterized in that** the shutter element is designed as a folding shutter (2) having a first shutter half (2a) and a second shutter half (2b) that is hingedly connected to the first shutter half, thereby enabling the first shutter half (2a) to swivel about a shutter axis (2c) relative to the second shutter half (2b), wherein the first shutter half (2a) and the second shutter half (2b) are interconnected by a film hinge (2d), and the shutter element (2) comprises a flexible film (2e), wherein the shutter halves (2a, 2b) are each formed substantially by strip-type reinforcements (2g, 2f) applied squarely onto the film (2e), and wherein the film hinge (2d) is formed by a region of the film disposed between the reinforcements (2g, 2f), and the film comprises a closing region (2h) that, in the case of at least one of the shutter halves (2a, 2b), extends beyond an end of the reinforcement (2g, 2f) facing away from the film hinge (2d).

2. The device according to claim 1, **characterized in that** a bolt (3a, 3b) for the rotatable support of the shutter halves is formed on a narrow side of each of the shutter halves (2a, 2b).

3. The device according to claim 1, **characterized in that** at least two folding shutters (2) are provided which, in a closed state of the device, lie substantially in a plane and abut one another, wherein the closing region (2h) of the film seals the region of the boundary between the two folding shutters (2).

4. The device according to one of the claims 1 or 3, **characterized in that** the film (2e) is composed of a plastic, in particular polyamide.

5. The device according to one of the claims 1 or 3 to 4, **characterized in that** the reinforcements (2g, 2f) are composed of a plastic, in particular polyamide.

6. The device according to claim 5, **characterized in that** the plastic of the reinforcements also contains fibers, in particular glass fibers to improve the mechanical properties of the reinforcements (2g, 2f).

7. The device according to one of the claims 1 or 3 to 6, **characterized in that** the bolts (3a, 3b) are designed as single-pieced, materially identical projections of the strip-type reinforcements (2g, 2f).

8. The device according to one of the claims 2 to 7, **characterized in that** a control rail (4) which can be moved relative to the frame element (1) is provided, wherein the bolt (3a) of the first shutter half (2a) is rotatably supported in the control rail (4), and the bolt (3b) of the second shutter half (2b) is rotatably supported on the frame element (1).

9. The device according to claim 8, **characterized in that** the control rail (4) can be driven directly using a linear drive.

10. The device according to claim 8, **characterized in that** a driveable, rotatable control shaft (7) is provided, wherein the rotation of the control shaft can be converted to a linear motion of the control rail (4).

11. The device according to claim 10, **characterized in that** the rotational motion is converted to linear motion using a cam lever (5).

12. The device according to claim 10 or 11, **characterized in that** the control shaft (7) is disposed behind the folding shutter (2) in the direction of the air flow, wherein the folding shutter (2) and the control shaft (7) lie flush with one another when the folding shutter is in an opened position.

13. The device according to one of the claims 10 to 12, **characterized in that** the control shaft (7) is disposed inside the opened folding shutter (2).

14. The device according to claim 12 or 13, **characterized in that**, an the opened position of the folding shutter, the control shaft (7) interacts with end regions (2h) of the shutter halves (2a, 2b) to prevent play in the opened folding shutter.

15. The device according to one of the claims 10 to 14, **characterized in that** at least two folding shutters (2) are provided, one control shaft (7) being assigned to each of the two folding shutters.

16. The device according to one of the claims 10 to 15, **characterized in that** the control shaft (7) is drivably connected to a second control shaft (10) using a hinged connection (11), wherein the second control shaft (10) is disposed at an angle to the first control shaft (7).

17. The device according to one of the claims 8 tc 16, **characterized in that** the shutter half (2b) supported on the frame (1) can be connected to the control rail using a sliding guide (17).

18. The device according to one of the claims 8 to 17, **characterized in that** a further control rail (4) is disposed on the other narrow side of the folding shutter relative to the control rail (4).

19. The device according to claim 18, **characterized in that** the control rail (4) and the further control rail (4) are securely interconnected using at least one bridge element (15).

20. The device according to one of the claims 2 to 19, **characterized in that** a holding means (8) designed as a cam in particular is provided, wherein, in an opened position of the folding shutter, the holding means interact with end regions (2h) of the shutter halves to prevent play in the opened folding shutter (2).

21. The device according to one of the claims 2 to 20, **characterized in that** the bolt (3a) of first shutter half (2a) is situated a different distance away from the shutter axis (2c) than the bolt (3b) of the second shutter half (2b).

22. The device according to one of the claims 1 to 21, **characterized in that** at least two adjacent folding shutters (2) are provided, wherein, during an opening motion, the shutter halves (2a, 2b) of one folding shutter swivel opposite to the shutter halves (2a, 2b) of the other folding shutter.

23. The device according to one of the claims 1 to 22, **characterized in that** the folding shutter (2) is accommodated such that it can move in the direction of its shutter axis (2c), wherein the shutter halves (2a, 2b) are each connected to converging guides (18), and therefore a motion of the folding shutter in the shutter-axis direction is correlated with an opening motion or a closing motion of the folding shutter.

24. The device according to one of the claims 1 to 23, **characterized in that** a second folding shutter is provided, wherein an opening motion of the second folding shutter can be delayed relative to the opening motion of the first folding shutter using a mechanical control means (25).

25. The device according to claim 24, **characterized in that** the control means (25) comprise a rotating shaft (20) and a hollow shaft (22) that encloses the rotating shaft, wherein a pivot bolt (21) connected to the rotating shaft drives a pivot bolt (23, 24) connected to the hollow shaft (22) once a certain angular position of the rotating shaft is reached.

26. A method for manufacturing a folding shutter for a device according to one of the claims 1 to 24, comprising the following steps:
a. Provide a film (2e) composed of a first plastic.
b. Place the film (2e) in an injection mold
c. Inject strip-type reinforcements (2g, 2f) composed of a second plastic onto the film.

27. The method according to claim 26, **characterized in that** method step a. includes cutting the film out of an endless strip.

28. The method according to claim 26 or 27, **characterized in that** the second plastic is substantially the same plastic as the first plastic.

29. The method according to claim 28, **characterized in that** the second plastic corresponds to the first plastic in terms of the fundamental formula thereof, wherein deviations can be disregarded, in particular in terms of an oligomer distribution and additives such as softening agents.

30. The method according to one of the claims 26 to 29, **characterized in that** the first plastic is polyamide.

31. The method according to one of the claims 26 to 30, **characterized in that** the second plastic is polyamide.

32. The method according to one of the claims 26 to 31, **characterized in that** the second plastic contains an additive, in particular glass fibers, that increases the mechanical loadability thereof.

## Revendications

1. Dispositif de régulation d'un flux d'air pour le refroidissement d'un moteur, comprenant :
- un élément de cadre (1) entourant au moins partiellement une surface de passage du flux d'air, et
- au moins un élément de volet (2) logé de façon réglable par rapport à l'élément de cadre (1), où la surface de passage pour le flux d'air peut être modifiée par un réglage de l'élément de volet (2),
**caractérisé en ce que** l'élément de volet est configuré comme un volet rabattable (2) comprenant une première moitié de volet (2a) et une seconde moitié de volet (2b) reliée à la première moitié de volet par une charnière, de sorte que la première moitié de volet (2a) peut basculer par rapport à la seconde moitié de volet (2b), autour d'un axe de volet (2c), où la première moitié de volet (2a) et la seconde moitié de volet (2b) sont reliées l'une à l'autre au moyen d'une charnière pelliculaire (2d) et **en ce que** l'élément de volet (2) comprend une feuille flexible (2e), où les moitiés de volet (2a, 2b) sont configurées, de façon respective, essentiellement par des renforts (2g, 2f), en forme de bandes, appliqués à plat sur la feuille (2e), et où la charnière pelliculaire (2d) est configurée par une zone de la feuille disposée entre les renforts (2g, 2f), et la feuille présente une zone de bordure (2h) qui, dans le cas d'au moins l'une des moitiés de volet (2a, 2b), dépasse d'une extrémité du renfort (2g, 2f), placée à l'opposé de la charnière pelliculaire (2d).

2. Dispositif selon la revendication 1, **caractérisé en ce qu'**un axe (3a, 3b) servant au montage en rotation des moitiés de volet est configuré sur un petit côté de chacune des moitiés de volet (2a, 2b).

3. Dispositif selon la revendication 1, **caractérisé en ce qu'**il est prévu au moins deux volets rabattables (2) qui, lorsque le dispositif est fermé, se trouvent pratiquement dans un plan et sont contigus l'un à l'autre, où une étanchéité de la zone de contiguïté des deux volets rabattables (2) est formée par la zone de bordure (2h) de la feuille.

4. Dispositif selon l'une des revendications 1 ou 3, **caractérisé en ce que** la feuille (2e) est en matière plastique, en particulier en polyamide.

5. Dispositif selon l'une quelconque des revendications 1, 3 ou 4, **caractérisé en ce que** les renforts (2g, 2f) sont en matière plastique, en particulier en polyamide.

6. Dispositif selon la revendication 5, **caractérisé en ce que** la matière plastique des renforts comporte en outre des fibres, en particulier des fibres de verre servant à l'amélioration des propriétés mécaniques des renforts (2g, 2f).

7. Dispositif selon l'une quelconque des revendications 1 ou 3 à 6, **caractérisé en ce que** les axes (3a, 3b) sont configurés comme des éléments saillants formant une seule et même pièce et un ensemble de matériau unitaire avec les renforts (2g, 2f) en forme de bandes.

8. Dispositif selon l'une quelconque des revendications 2 à 7, **caractérisé en ce qu'**il est prévu un rail de commande (4) mobile par rapport à l'élément de cadre (1), où l'axe (3a) de la première moitié de volet (2a) est monté en rotation dans le rail de commande (4), et l'axe (3b) de la seconde moitié de volet (2b) est monté en rotation sur l'élément de cadre (1).

9. Dispositif selon la revendication 8, **caractérisé en ce que** le rail de commande (4) peut être actionné directement au moyen d'un entraînement linéaire.

10. Dispositif selon la revendication 8, **caractérisé en ce qu'**il est prévu un arbre de commande (7) pouvant être actionné en rotation, où la rotation de l'arbre de commande peut être transmise en un mouvement linéaire du rail de commande (4).

11. Dispositif selon la revendication 10, **caractérisé en ce que** la transmission du mouvement de rotation, en un mouvement linéaire, est réalisée au moyen d'un levier à cames (5).

12. Dispositif selon la revendication 10 ou 11, **caractérisé en ce que** l'arbre de commande (7) est disposé, suivant la direction d'écoulement de l'air, derrière le volet rabattable (2), où le volet rabattable (2) et l'arbre de commande (7) sont alignés lorsque le volet rabattable est en position ouverte.

13. Dispositif selon l'une quelconque des revendications 10 à 12, **caractérisé en ce que** l'arbre de commande (7) est disposé à l'intérieur du volet rabattable ouvert (2).

14. Dispositif selon la revendication 12 ou 13, **caractérisé en ce que** l'arbre de commande (7), lorsque le volet rabattable est en position ouverte, fonctionne de façon conjuguée avec des zones d'extrémités (2h) des moitiés de volet (2a, 2b), pour éviter que le mouvement du volet rabattable ouvert ait du jeu.

15. Dispositif selon l'une quelconque des revendications 10 à 14, **caractérisé en ce qu'**il est prévu au moins deux volets rabattables (2), où un arbre de commande (7) est associé, à chaque fois, à chacun des deux volets rabattables.

16. Dispositif selon l'une quelconque des revendications 10 à 15, **caractérisé en ce que** l'arbre de commande (7) pouvant être actionné avec un deuxième arbre de commande (10) est assemblé au moyen d'un joint articulé (11), où le deuxième arbre de commande (10) est disposé de façon angulaire par rapport au premier arbre de commande (7).

17. Dispositif selon l'une quelconque des revendications 8 à 16, **caractérisé en ce que** la moitié de volet (2b) montée sur le cadre (1) peut être assemblée avec le rail de commande, au moyen d'un guide de coulisse (17).

18. Dispositif selon l'une quelconque des revendications 8 à 17, **caractérisé en ce qu'**un autre rail de commande (4) est associé aux petits côtés du volet rabattable, situés de l'autre côté par rapport au rail de commande (4).

19. Dispositif selon la revendication 18, **caractérisé en ce que** le rail de commande (4) et l'autre rail de commande (4) sont assemblés l'un à l'autre, de façon fixe, au moyen d'au moins un élément de pontage (15).

20. Dispositif selon l'une quelconque des revendications 2 à 19, **caractérisé en ce qu'**il est prévu un moyen de retenue (8) configuré en particulier comme une came, où le moyen de retenue, lorsque le volet rabattable est en position ouverte, fonctionne de façon conjuguée avec des zones d'extrémités (2h) des moitiés de volet, pour éviter que le mouvement du volet rabattable (2) ouvert ait du jeu.

21. Dispositif selon l'une quelconque des revendications 2 à 20, **caractérisé en ce que** l'axe (3a) de la première moitié de volet (2a) présente, par rapport à l'axe de volet (2c), une distance différente de celle de l'axe (3b) de la seconde moitié de volet (2b).

22. Dispositif selon l'une quelconque des revendications 1 à 21, **caractérisé en ce qu'**il est prévu au moins deux volets rabattables (2) contigus, où les moitiés de volet (2a, 2b) de l'un des volets rabattables basculent, au cours d'un mouvement d'ouverture, en sens inverse par rapport aux moitiés de volet (2a, 2b) de l'autre volet rabattable.

23. Dispositif selon l'une quelconque des revendications 1 à 22, **caractérisé en ce que** le volet rabattable (2) est logé en étant façon mobile suivant la direction de son axe de volet (2c), où les moitiés de volet (2a, 2b) sont assemblées à chaque fois par des guidages (18) convergeant l'un vers l'autre, de sorte qu'un mouvement du volet rabattable est en corrélation avec un mouvement d'ouverture ou de fermeture du volet rabattable se produisant suivant la direction de l'axe du volet.

24. Dispositif selon l'une quelconque des revendications 1 à 23, **caractérisé en ce qu'**il est prévu un deuxième volet rabattable, où un mouvement d'ouverture du deuxième volet rabattable peut, à l'aide d'un moyen de commande mécanique (25), être retardé par rapport au mouvement d'ouverture du premier volet rabattable.

25. Dispositif selon la revendication 24, **caractérisé en ce que** le moyen de commande (25) comprend un arbre de rotation (20) et un arbre creux (22) entourant l'arbre de rotation, où un tourillon (21) associé à l'arbre de rotation entraîne un tourillon (23, 24) associé à l'arbre creux (22), à partir d'une position angulaire déterminée de l'arbre de rotation.

26. Procédé de fabrication d'un volet rabattable pour un dispositif selon l'une quelconque des revendications 1 à 24, comprenant les étapes suivantes consistant :
a. à préparer une feuille (2e) se composant d'une première matière plastique.
b. à introduire la feuille (2e) dans un moule à injection.
c. à mouler par injection, sur la feuille, des renforts (2g, 2f) en forme de bandes se composant d'une deuxième matière plastique.

27. Procédé selon la revendication 26, **caractérisé en ce que** l'étape a. du procédé comprend une découpe de la feuille à partir d'une bande sans fin.

28. Procédé selon la revendication 26 ou 27, **caractérisé en ce que** la deuxième matière plastique est pratiquement la même matière plastique que la première matière plastique.

29. Procédé selon la revendication 28, **caractérisé en ce que** la deuxième matière plastique correspond, concernant sa forme de base, à la première matière plastique, où des différences peuvent apparaître, sans être prises en considération, en particulier concernant une répartition d'oligomères et concernant des additifs comme par exemple des plastifiants.

30. Procédé selon l'une quelconque des revendications 26 à 29, **caractérisé en ce que** la première matière plastique est un polyamide.

31. Procédé selon l'une quelconque des revendications 26 à 30, **caractérisé en ce que** la deuxième matière plastique est un polyamide.

32. Procédé selon l'une quelconque des revendications 26 à 31, **caractérisé en ce que** la deuxième matière plastique contient un additif, en particulier des fibres de verre, augmentant sa capacité de charge mécanique.
